# EUROPEAN PATENT SPECIFICATION

(11) **EP 4 354 080 B1**
(45) Date of publication and mention of the grant of the patent: **28.01.2026**
(21) Application number: 22842133.5
(22) Date of filing: 12.07.2022
(51) Int. Cl.: G01B 11/24, B65G 43/02

(54) **SURFACE SHAPE MEASUREMENT DEVICE, SURFACE SHAPE MEASUREMENT METHOD, AND CONVEYOR BELT MANAGEMENT METHOD**
OBERFLÄCHENFORMMESSVORRICHTUNG, OBERFLÄCHENFORMMESSVERFAHREN UND FÖRDERBANDVERWALTUNGSVERFAHREN
DISPOSITIF DE MESURE DE FORME DE SURFACE, PROCÉDÉ DE MESURE DE FORME DE SURFACE, ET PROCÉDÉ DE GESTION DE BANDE TRANSPORTEUSE

(30) Priority: 13.07.2021 JP 2021115982
(43) Date of publication of application: 17.04.2024
(73) Proprietor: JFE Steel Corporation, Tokyo 100-0011 (JP)
(72) Inventor: YAMAHIRA Naoshi, Tokyo 100-0011 (JP); AKECHI Yoshihiro, Tokyo 100-0011 (JP)
(74) Representative: Hoffmann Eitle
(86) International application number: PCT/JP2022/027476
(87) International publication number: WO 2023/286791

(56) References cited:
- WO-A1-2012/073401
- JP-A- 2006 132 942
- JP-A- 2006 132 942
- JP-A- 2012 112 918
- JP-A- H01 193 604
- US-B2- 9 115 979

## Description

### TECHNICAL FIELD

The present disclosure relates to a surface shape measurement device, a surface shape measurement method, and a conveyor belt management method. The present disclosure relates particularly to a surface shape measurement device, a surface shape measurement method, and a conveyor belt management method that measure the unevenness of the conveyor belt wrapped around a pulley.

### BACKGROUND

Belt conveyors including a conveyor belt wrapped around a pair of pulleys are known as transport devices that transport raw materials or the like. In belt conveyors, the thickness of the conveyor belt needs to be managed so as to prevent fractures of the conveyor belt.

Here, as a method of measuring the thickness of a conveyor belt, for example, Patent Literature (PTL) 1 describes a surface shape monitoring device that measures the unevenness of a surface of a conveyor belt by a light-section method using a line laser. Furthermore, Patent Literature (PTL) 2 describes a wear measurement device that measures the unevenness of both surfaces of a conveyor belt by a pair of non-contact displacement measuring means provided across the conveyor belt.

### CITATION LIST

### Patent Literatures

PTL 1: WO 2019/188718 A1
PTL 2: JP 2018-159670 A
US 9 115 979 B2 discloses a web thickness measuring equipment and a method of measuring a web thickness. WO 2012/073401 A1 discloses a roll displacement measurement to measure, with high precision, the displacement of a roll to which an object to be measured is attached, and also measures, with high precision, the thickness dimensions of the object to be measured, irrespective of the material of the object to be measured.

### SUMMARY

### (Technical Problem)

According to the technique of PTL 1, the unevenness of the conveyor belt is measured by emitting a laser beam onto the surface of part of the conveyor belt that contacts a pulley. Accordingly, in a case in which the pulley itself is worn and uneven, it is impossible to accurately measure the thickness of the conveyor belt. According to the technique of PTL 2, the unevenness of the conveyor belt is measured at a position away from pulleys, so the posture of the conveyor belt easily becomes unstable, such as by swinging up and down, thus making it difficult to improve the accuracy of measuring the unevenness of the conveyor belt.

It would be helpful to provide a surface shape measurement device, a surface shape measurement method, and a conveyor belt management method that measure a surface shape of a conveyor belt with high accuracy.

### (Solution to Problem)

The above-mentioned problems are resolved by the invention as set forth in the independent claims. Further embodiments are defined by the dependent claims.

### (Advantageous Effect)

According to the present disclosure, the surface shape measurement device, the surface shape measurement method, and the conveyor belt management method that measure the surface shape of the conveyor belt with high accuracy can be provided.

### BRIEF DESCRIPTION OF THE DRAWINGS

In the accompanying drawings:
FIG. 1 illustrates an example configuration of a surface shape measurement device according to an embodiment;
FIG. 2 is a schematic diagram illustrating a belt conveyor that is measured by the surface shape measurement device according to an embodiment;
FIG. 3 illustrates how the surface shape of a pulley is measured by a pulley surface measurement unit;
FIG. 4 illustrates how the surface shape of a conveyor belt is measured by a belt surface measurement unit;
FIG. 5 illustrates an example of unevenness that occurs on a pulley; and
FIG. 6 is a flowchart illustrating an example of a surface shape measurement method according to an embodiment.

### DETAILED DESCRIPTION

Hereinafter, a surface shape measurement device, a surface shape measurement method, and a conveyor belt management method according to embodiments of the present disclosure will be described with reference to the drawings. In the figures, the same or corresponding portions are denoted with the same reference signs. In the description of the present embodiments, description of the same or corresponding portions will be omitted or simplified as appropriate.

### (Embodiment 1)

### <Surface Shape Measurement Device>

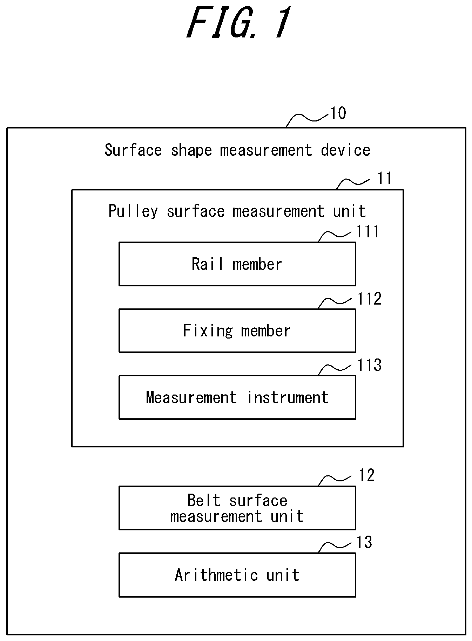

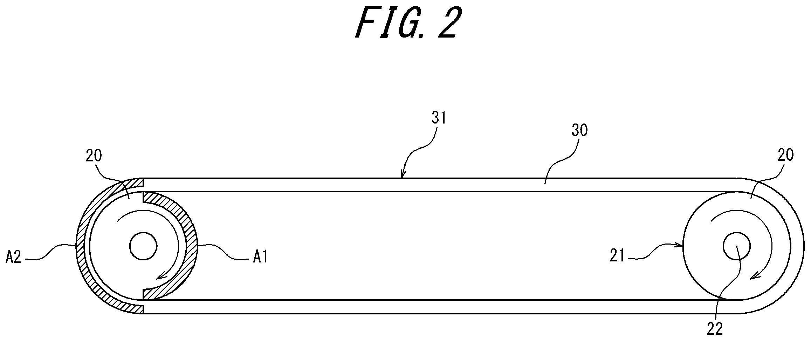

FIG. 1 illustrates an example configuration of a surface shape measurement device 10 according to the present embodiment. FIG. 2 is a schematic diagram illustrating a belt conveyor 1 that is measured by the surface shape measurement device 10. The surface shape measurement device 10 measures the surface shape of a conveyor belt 30 (refer to FIG. 2), which is wrapped around pulleys 20 (refer to FIG. 2). In the belt conveyor 1, the thickness of conveyor belt 30 needs to be managed so as to prevent fractures of the conveyor belt 30. The thickness of the conveyor belt 30 can be computed and managed, based on the surface shape measured by the surface shape measurement device 10. Here, the surface shape is a shape of the surface including its unevenness. For example, an indented portion on the surface of the conveyor belt 30 compared to its surroundings can indicate that this portion of the conveyor belt 30 is thinner than the surroundings.

As illustrated in FIG. 1, the surface shape measurement device 10 according to the present embodiment includes a pulley surface measurement unit 11, a belt surface measurement unit 12, and an arithmetic unit 13. The pulley surface measurement unit 11 includes a rail member 111, a fixing member 112, and a measurement instrument 113. The surface shape measurement device 10 is a device that measures the surface shape of the conveyor belt 30, by the pulley surface measurement unit 11, the belt surface measurement unit 12, and the arithmetic unit 13 operating in cooperation. The pulley surface measurement unit 11, the belt surface measurement unit 12, and the arithmetic unit 13 may be connected by a network, such as a local area network (LAN), so as to transmit and receive information (measurement data) obtained from measurement. Details of the components of the surface shape measurement device 10 will be described later.

As illustrated in FIG. 2, the conveyor belt 30, which is an object to be measured by the surface shape measurement device 10, is wrapped around a pair of pulleys 20. When the pulleys 20 rotate, the conveyor belt 30 can move and convey transported items placed on a surface 31. Here, the surface 31 of the conveyor belt 30 is a surface (outer surface) of the conveyor belt 30 that is opposite to a surface (inner surface) located closer to the pulleys 20. A surface 21 of a pulley 20 is a cylindrical surface of the pulley 20, which has a cylindrical shape. A center 22 refers to the center of rotation of a pulley 20. An area A2 refers to a portion in which the conveyor belt 30 contacts a pulley 20. An area A1 is a portion in which the conveyor belt 30 does not contact a pulley 20.

### <Pulley Surface Measurement Unit>

The pulley surface measurement unit 11 measures the surface shape of a pulley 20. The measurement of the surface shape of the pulley 20 by the pulley surface measurement unit 11 is also referred to as a "first measurement." In the present embodiment, the pulley surface measurement unit 11 is a contact measurement device that measures the surface shape of the pulley 20 while being in contact with the pulley 20. In the present embodiment, the pulley surface measurement unit 11 performs the first measurement when the rotation of the pulley 20 and the conveyor belt 30 is stopped.

As described above, the pulley surface measurement unit 11 includes the rail member 111, the fixing member 112, and the measurement instrument 113. The rail member 111 is a rail-shaped member that extends in a width direction of the pulley 20. Here, the width direction is a direction parallel to an axis of rotation of the pulley 20. The rail member 111 is arranged in the area A1 of FIG. 2, that is, the portion in which the conveyor belt 30 does not contact the pulley 20. The fixing member 112 is a member that fixes the rail member 111 to the pulley 20. The measurement instrument 113 is an instrument that measures the surface shape of the pulley 20 while moving on the rail member 111.

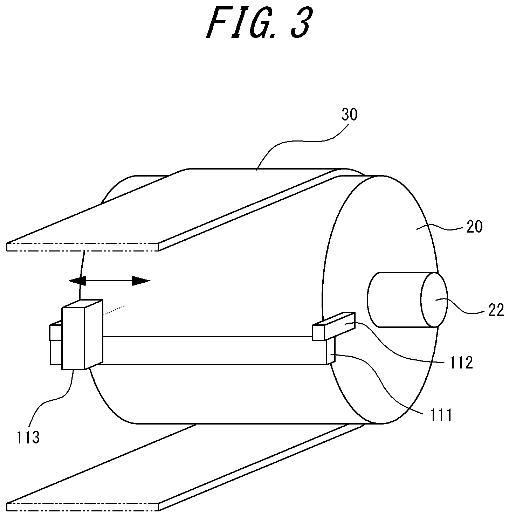

FIG. 3 illustrates how the surface shape of a pulley 20 is measured by the pulley surface measurement unit 11. In the first measurement, the measurement instrument 113 measures the surface shape while traveling (scanning) along the width direction of the pulley 20 on the rail member 111, which extends in the width direction of the pulley 20. The fixing member 112 is, for example, a pair of clamping mechanisms that clamp left and right edges of the pulley 20, thereby fixing the rail member 111. The fixing member 112, which can fix the rail member 111 to the pulley 20, is not limited to clamping mechanisms. The measurement instrument 113 is an instrument that measures the distance at one point. The pulley surface measurement unit 11 may further include an encoder, or a laser rangefinder or the like that measures the distance from an end of the rail member 111, so as to measure the position of the measurement instrument 113 on the rail member 111. Thus, the pulley surface measurement unit 11 can perform the first measurement to thereby obtain information on the surface shape of the pulley 20, including its unevenness.

Here, a structure designed to hold the pulley 20 is provided in the vicinity of the pulley 20, and there is generally only a small space. Since the conveyor belt 30 is wrapped around the pulley 20, only part of the surface of the pulley 20 (area A1 of FIG. 2) can be measured. Furthermore, there are various types of belt conveyors 1, and the structure in the vicinity of the pulley 20 differs for each type of belt conveyor 1. Therefore, in a case in which the pulley surface measurement unit 11 is configured to be fixed to the structure designed to hold the pulley 20, an object to be measured by the pulley surface measurement unit 11 is limited because the same structure may not be available for another type of belt conveyor 1. In the present embodiment, the pulley surface measurement unit 11 is configured in a manner such that the rail member 111 is fixed to the pulley 20 itself by the fixing member 112, and the contact measurement instrument 113 moves on the rail member 111. This configuration can reduce the size and allows the surface shape of the pulley 20 to be measured with high accuracy in the narrow space inside the conveyor belt 30.

As illustrated in FIG. 2, the conveyor belt 30 is wrapped around a plurality of pulleys 20, but it is sufficient to measure a surface shape of one of the plurality of pulleys 20. Here, the pair of pulleys 20 can be configured so that one includes a drive mechanism (e.g., a motor) and the other does not include a drive mechanism. In such a configuration, a space in the vicinity of the pulley 20 without a drive mechanism is often larger than a space in the vicinity of the pulley 20 with the drive mechanism. Therefore, from the viewpoint of ease of installation, it is preferable for the pulley surface measurement unit 11 to measure the surface shape of the pulley 20 that does not include a drive mechanism in the plurality of pulleys 20 around which the conveyor belt 30 is wrapped.

In another configuration example, the measurement instrument 113 of the pulley surface measurement unit 11 may be a non-contact instrument, such as an instrument with light-section method, in a case in which there is a space where it can be installed in the vicinity of the pulley 20. Furthermore, the pulley surface measurement unit 11 may be configured to measure the entire length in the width direction of the pulley 20 at once using an instrument that extends over the entire length in the width direction of the pulley 20, instead of being configured to cause the measurement instrument 113 to scan it. Moreover, the pulley surface measurement unit 11 may be configured so that the rail member 111 is held near the surface of the pulley 20 using a stand or the like installed on the ground, instead of being configured so that the rail member 111 is fixed to the pulley 20.

### <Belt Surface Measurement Unit>

The belt surface measurement unit 12 measures the surface shape of the conveyor belt 30. The measurement of the surface shape of the conveyor belt 30 by the belt surface measurement unit 12 is also referred to as a "second measurement." In the present embodiment, the belt surface measurement unit 12 is a non-contact measurement device that measures the surface shape of the conveyor belt 30 while being out of contact with the conveyor belt 30. The belt surface measurement unit 12 performs the second measurement when the pulley 20 and the conveyor belt 30 are rotating.

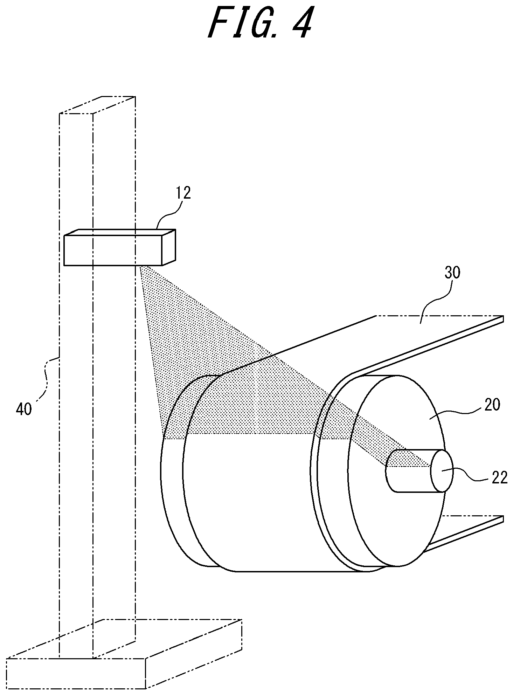

FIG. 4 illustrates how the surface shape of the conveyor belt 30 is measured by the belt surface measurement unit 12. In the present embodiment, the belt surface measurement unit 12 is a device using the laser light-section method, such as a distance meter with light-section method. The belt surface measurement unit 12 can measure the surface shape of the entire length in the width direction of the conveyor belt 30, by emitting a laser beam onto the conveyor belt 30. The belt surface measurement unit 12 is provided in a position that allows the laser beam to be emitted onto the conveyor belt 30 from diagonally above the pulleys 20. Because the belt surface measurement unit 12 is provided at such a position, the surface shape of the conveyor belt 30 can be measured at the portion (area A2 of FIG. 2) in which the conveyor belt 30 contacts the pulley 20. The belt surface measurement unit 12 may be configured to be held near the pulley 20 by a holding member 40 installed on the ground. At this time, in order to accurately measure the thickness direction of the conveyor belt 30, the belt surface measurement unit 12 is installed so that the direction of the laser beam passes through the center 22 of the pulley 20. The belt surface measurement unit 12 measures the surface shape of the conveyor belt 30 in the area A2 of FIG. 2, so that the conveyor belt 30 does not swing up and down and can be measured in a stable posture. Thus, the belt surface measurement unit 12 can perform the second measurement and obtain information on the surface shape of the conveyor belt 30, including its unevenness. It is to be noted that the information on the surface shape according to the second measurement is information including that on the surface shape of not only the conveyor belt 30 but also the pulley 20.

In another configuration example, a device that does not use the laser light-section method can be employed as the belt surface measurement unit 12. However, because the belt surface measurement unit 12 measures the surface shape of the conveyor belt 30 when the conveyor belt 30 is rotating, it is preferable to employ a non-contact measurement device that can make a measurement while being out of contact with the conveyor belt 30.

### <Arithmetic Unit>

The arithmetic unit 13 calculates the surface shape of only the conveyor belt 30, based on the information on the surface shape obtained in the first measurement and the information on the surface shape obtained in the second measurement. In the first measurement by the pulley surface measurement unit 11, information on the surface shape of the pulley 20 is obtained. In the second measurement by the belt surface measurement unit 12, information including that on the surface shape of not only the conveyor belt 30 but also the pulley 20 is obtained. The arithmetic unit 13 compares the information on the surface shape obtained in the first measurement with the information on the surface shape obtained in the second measurement, so as to calculate the surface shape of only the conveyor belt 30, excluding the influence of the surface shape of the pulley 20. Here, the computation performed by the arithmetic unit 13 includes, for example, subtracting the information on the surface shape obtained in the first measurement from the information on the surface shape obtained in the second measurement. Furthermore, the computation performed by the arithmetic unit 13 includes computation to align the position (coordinates) in the surface shape obtained in the first measurement with the position (coordinates) in the surface shape obtained in the second measurement in the above subtraction.

The arithmetic unit 13 may be configured to include a processor that performs computation, and a memory storing data (e.g., information on surface shapes) to be used in the computation. The arithmetic unit 13 may be, for example, a computer. The processor can be, for example, a general-purpose processor or a dedicated processor that is dedicated to specific processing, but is not limited to these and can be any processor. The memory includes one or more memories. The memory can be, for example, a semiconductor memory, a magnetic memory, an optical memory, or the like, but is not limited to these and can be any memory.

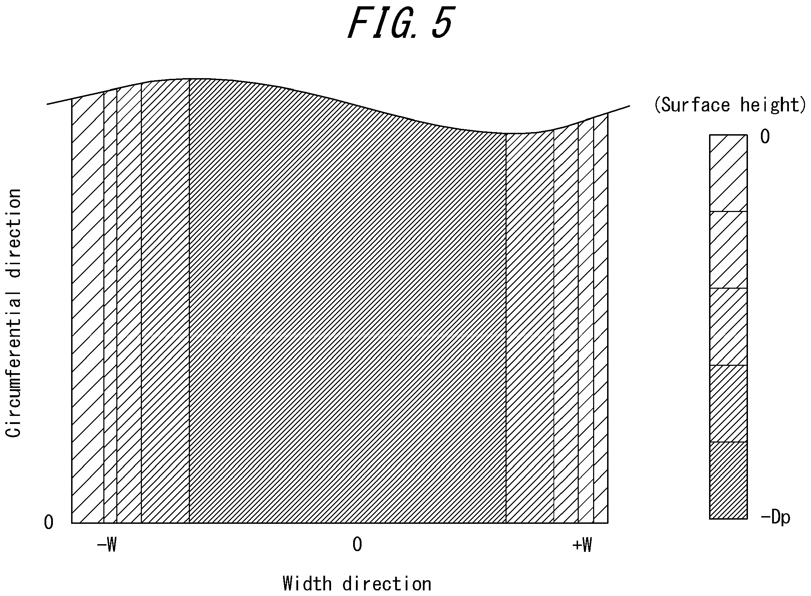

Here, FIG. 5 illustrates an example of unevenness that occurs on a pulley 20. Indentations occur on the pulley 20 mainly due to wear. Regarding indentations due to wear, an indentation in the width direction that is measured with the pulley 20 being stopped at a certain rotation angle is identical to an indentation in the width direction that is measured with the pulley 20 being stopped at another rotation angle. That is, the surface shape (unevenness due to wear) in the width direction can be considered to be the same over the entire circumference (throughout a circumferential direction) of the pulley 20.

In the present embodiment, as information on the surface shape obtained in the first measurement, the arithmetic unit 13 acquires measurement data in the width direction (of a single scan along the width direction) measured with the pulley 20 being stopped at a certain rotation angle, and applies the acquired measurement data to the entire circumference of the pulley 20. The arithmetic unit 13 can reduce computational load, by applying the measurement data of the single scan to the entire circumference of the pulley 20 while calculating the surface shape of only the conveyor belt 30, excluding the influence of the surface shape of the pulley 20, with high accuracy.

### <Surface Shape Measurement Method>

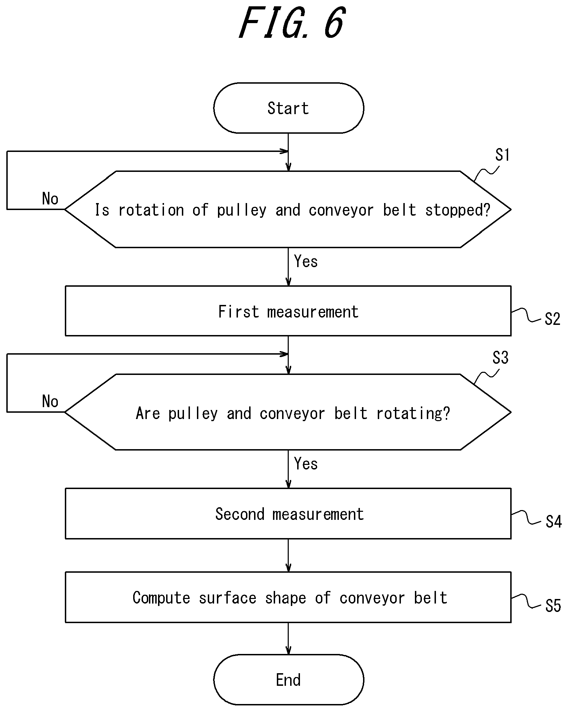

FIG. 6 is a flowchart illustrating an example of a surface shape measurement method performed by the surface shape measurement device 10 according to the present embodiment.

The surface shape measurement device 10 waits when a pulley 20 and the conveyor belt 30 are rotating (No in Step S1). When the rotation of the pulley 20 and the conveyor belt 30 is stopped (Yes in Step S1), the surface shape measurement device 10 sets the pulley surface measurement unit 11 and performs the first measurement (Step S2). In the first measurement, the surface shape measurement device 10 measures the surface shape in the width direction of the pulley 20 being stopped at a predetermined rotation angle, by causing the measurement instrument 113 to scan the surface shape. Information on the surface shape of the pulley 20 obtained in the first measurement may be output from the pulley surface measurement unit 11 to the arithmetic unit 13 and stored in the arithmetic unit 13. Here, Step S2 corresponds to a pulley surface measurement process.

The surface shape measurement device 10 waits when the rotation of the pulley 20 and the conveyor belt 30 is stopped (No in step S3). When the pulley 20 and the conveyor belt 30 are rotating (Yes in Step S3), the surface shape measurement device 10 performs the second measurement by the belt surface measurement unit 12 (Step S4). In the second measurement, the surface shape measurement device 10 measures the surface shape in the width direction of the conveyor belt 30 over the entire length in a transport direction of the conveyor belt 30. Information on the surface shape of the conveyor belt 30 obtained in the second measurement (that includes the influence of the surface shape of the pulley 20) may be output from the belt surface measurement unit 12 to the arithmetic unit 13 and stored in the arithmetic unit 13. Here, Step S4 corresponds to a belt surface measurement process.

The arithmetic unit 13 of the surface shape measurement device 10 computes the surface shape of only the conveyor belt 30 using the stored information on the surface shapes (Step S5). As a result of this computation, the surface shape of only the conveyor belt 30, excluding the influence of the surface shape of the pulley 20, can be obtained for the entire length in the transport direction and the width direction of the conveyor belt 30. Here, Step S5 corresponds to a computing process.

The arithmetic unit 13 may display the surface shape of only the conveyor belt 30, for example, on an external display device (in an example, a display), so that an operation manager or the like of the belt conveyor 1 can manage the thickness of the conveyor belt 30 so as to prevent fractures of the conveyor belt 30. Here, the external display device may be a device included in a process computer that manages operational machines, including the belt conveyor 1.

### <Belt Management Method>

Using the above surface shape measurement method, the conveyor belt 30 can be managed (monitored), based on the computed surface shape of the conveyor belt 30. The surface shape measurement device 10 determines, for example, whether the thickness of the conveyor belt 30 is sufficient, based on the computed surface shape of the conveyor belt 30. When determining that the thickness is not sufficient, the surface shape measurement device 10 can inform an operator of a fault in the conveyor belt 30 or stop the belt conveyor 1. For example, the surface shape measurement device 10 may cause a display device or an audio output device (e.g., speaker) included in the process computer that manages the operational machines to report the fault. For example, upon acquiring, from the surface shape measurement device 10, a signal requesting to report the fault, the process computer may not only report the fault but may also stop the belt conveyor 1. By thus managing the conveyor belt 30 based on the computed surface shape of the conveyor belt 30, it is possible to detect a fault in the conveyor belt 30 with high accuracy and to promptly address the fault.

As described above, with the above configurations and processes, the surface shape measurement device 10 and the surface shape measurement method according to the present embodiment can measure the surface shape of the conveyor belt 30 with high accuracy. Furthermore, the surface shape measurement device 10 according to the present embodiment includes the pulley surface measurement unit 11, which is configured to include the rail member 111, the fixing member 112, and the measurement instrument 113. This configuration can reduce the size of the pulley surface measurement unit 11, thus allowing the surface shape of the pulley 20 to be measured with high accuracy in the narrow space inside the conveyor belt 30. Moreover, the pulley surface measurement unit 11 can be installed on various types of belt conveyors 1 with different configurations. Moreover, the belt management method according to the present embodiment makes it possible to accurately determine the thickness of the conveyor belt 30, so that the conveyor belt 30 can be managed so as to prevent fractures or the like.

### (Embodiment 2)

In the first embodiment, the arithmetic unit 13 applies measurement data in the width direction (of a single scan along the width direction) measured with the pulley 20 being stopped at a certain rotation angle to the entire circumference of the pulley 20, as information on the surface shape obtained in the first measurement. Here, the surface shape of the pulley 20 may vary in a rotating direction (circumferential direction), for example, in a case in which the surface of the pulley 20 is damaged in part. The surface shape measurement device 10 and the surface shape measurement method according to the second embodiment can measure the surface shape of only the conveyor belt 30 with high accuracy, even when the surface shape of the pulley 20 varies in part, as will be explained below. To avoid redundant explanation, the following will explain configurations and processes that differ from the first embodiment.

In the present embodiment, in the first measurement by the pulley surface measurement unit 11, the surface shape of the pulley 20 is measured at respective predetermined rotation angles. Specifically, measurement is made multiple times, by rotating the pulley 20 and fixing the rail member 111 to the pulley 20 each time the rotation angle is changed. Here, in order to sufficiently measure the surface shape in the rotating direction (circumferential direction), measurement is preferably made in four or more directions viewed from the center 22 (at respective predetermined rotation angles, wherein each predetermined rotation angle is 90° or less). At this time, the rotation angle of the pulley 20 with respect to the reference position is measured, for example, by an encoder attached to the axis of rotation of the pulley 20. In the present embodiment, in information on the surface shape of the pulley 20 obtained in the first measurement, the rotation angle of the pulley 20 is associated with information on the surface shape in the width direction. In the present embodiment, the first measurement modified as described above is also performed in the pulley surface measurement process of the surface shape measurement method (refer to Step S2 of FIG. 6).

Then, in accordance with a rotation angle (angle rotated with respect to the reference position) of the pulley 20, the arithmetic unit 13 reads corresponding information on the surface shape of the pulley 20 at the rotation angle and computes the surface shape of the conveyor belt 30, excluding the influence of the surface shape of the pulley 20. In the present embodiment, computation is also performed using information on the surface shape corresponding to each rotation angle in the computing process of the surface shape measurement method (refer to Step S5 of FIG. 6). Here, regarding the position in the transport direction of the conveyor belt 30, a portion thereof that contacts the reference position of the pulley 20 may be set as the reference position. Such a method of setting the reference position or another known method is used to associate the rotating direction of the pulley 20 with the position in the transport direction of the conveyor belt 30.

As described above, with the above configurations and processes, the surface shape measurement device 10 and the surface shape measurement method according to the present embodiment can exclude the influence of local deformations, such as scratches made on part of the surface of the pulley 20, even when they are present. Therefore, the surface shape measurement device 10 and the surface shape measurement method according to the present embodiment can measure the surface shape of only the conveyor belt 30 with even higher accuracy.

Although embodiments of the present disclosure have been described based on the drawings and examples, it is to be noted that various modifications and changes may be made by those skilled in the art based on the present disclosure. Accordingly, such modifications and changes are included within the scope of the present disclosure. For example, functions or the like included in each component, each step (process), or the like can be rearranged without logical inconsistency, and a plurality of components, steps, or the like can be combined into one or divided. Embodiments according to the present disclosure can be implemented as a program that is performed by a processor included in a device, or as a storage medium in which the program is recorded. It is to be understood that these are included within the scope of present disclosure.

In the above embodiment, the computation performed by the arithmetic unit 13 includes subtraction, and computation to align positions (coordinates). Here, the computation performed by the arithmetic unit 13 may include exception handling. For example, in a case in which there is a groove on the surface of a pulley 20 for preventing slippage from the conveyor belt 30, the arithmetic unit 13 may exclude information on the surface shape in a portion with the groove based on information on the position measured, or adjust the value so as to cancel out the groove. For example, in a case in which the conveyor belt 30 has a joint, the arithmetic unit 13 may exclude information on the surface shape of a portion with the joint based on information on the position measured, or adjust the value to cancel out the joint.

### REFERENCE SIGNS LIST

- 1: Belt conveyor
- 10: Surface shape measurement device
- 11: Pulley surface measurement unit
- 12: Belt surface measurement unit
- 13: Arithmetic unit
- 20: Pulley
- 21: Surface of pulley
- 22: Center
- 30: Conveyor belt
- 31: Surface of conveyor belt
- 40: Holding member
- 111: Rail member
- 112: Fixing member
- 113: Measurement instrument

## Claims

1. A surface shape measurement device (10) configured to measure a surface shape of a conveyor belt (30) wrapped around a pulley (20), the surface shape being a shape of the surface including its unevenness, the surface shape measurement device (10) comprising:
a pulley surface measurement unit (11) configured to perform a first measurement in which a surface shape of the pulley (20) is measured;
a belt surface measurement unit (12) configured to perform a second measurement in which the surface shape of the conveyor belt (30) is measured in a portion in which the conveyor belt (30) contacts the pulley (20); and
an arithmetic unit (13) configured to compute the surface shape of the conveyor belt (30), excluding an influence of the surface shape of the pulley (20), based on information on the surface shape obtained in the first measurement and information on the surface shape obtained in the second measurement,
**characterized in that** the pulley surface measurement unit (11) includes:
a rail member (111) extending in a width direction of the pulley (20) in a portion in which the conveyor belt (30) does not contact the pulley (20);
a fixing member (112) configured to fix the rail member (111) to the pulley (20); and
a measurement instrument (113) configured to measure the surface shape of the pulley (20) while moving on the rail member (111).

2. The surface shape measurement device (10) according to claim 1, wherein
the pulley surface measurement unit (11) is configured to measure the surface shape of the pulley (20) at respective predetermined rotation angles, and
in accordance with a rotation angle of the pulley (20), the arithmetic unit (13) reads corresponding information on the surface shape of the pulley (20) at the rotation angle and computes the surface shape of the conveyor belt (30), excluding the influence of the surface shape of the pulley (20).

3. The surface shape measurement device (10) according to claim 1 or 2, wherein
the pulley surface measurement unit (11) is a contact measurement device configured to measure the surface shape of the pulley (20) while being in contact with the pulley (20), and
the belt surface measurement unit (12) is a non-contact measurement device configured to measure the surface shape of the conveyor belt (30) while being out of contact with the conveyor belt (30).

4. The surface shape measurement device (10) according to any one of claims 1 to 3, wherein
the pulley (20) comprises a plurality of pulleys around which the conveyor belt (30) is wrapped, and
the pulley surface measurement unit (11) is configured to measure a surface shape of a pulley (20) in the plurality of pulleys that does not include a drive mechanism.

5. A surface shape measurement method performed by a surface shape measurement device (10) configured to measure a surface shape of a conveyor belt (30) wrapped around a pulley (20), the surface shape being a shape of the surface including its unevenness, the surface shape measurement method comprising:
a pulley surface measurement process of performing a first measurement in which a surface shape of the pulley (20) is measured;
a belt surface measurement process of performing a second measurement in which the surface shape of the conveyor belt (30) is measured in a portion in which the conveyor belt (30) contacts the pulley (20); and
a computing process of computing the surface shape of the conveyor belt (30), excluding an influence of the surface shape of the pulley (20), based on information on the surface shape obtained in the first measurement and information on the surface shape obtained in the second measurement, wherein the pulley surface measurement process is performed by a pulley surface measurement unit (11) which includes:
a rail member (111) extending in a width direction of the pulley (20) in a portion in which the conveyor belt (30) does not contact the pulley (20);
a fixing member (112) configured to fix the rail member (111) to the pulley (20); and
a measurement instrument (113) configured to measure the surface shape of the pulley (20) while moving on the rail member (111).

6. The surface shape measurement method according to claim 5, wherein
the pulley surface measurement process is performed when rotation of the pulley (20) and the conveyor belt (30) is stopped, and
the belt surface measurement process is performed when the pulley (20) and the conveyor belt (30) are rotating.

7. The surface shape measurement method according to claim 5 or 6, wherein
the pulley surface measurement process measures the surface shape of the pulley (20) at respective predetermined rotation angles, and
in accordance with a rotation angle of the pulley (20), the computing process reads corresponding information on the surface shape of the pulley (20) at the rotation angle and computes the surface shape of the conveyor belt (30), excluding the influence of the surface shape of the pulley (20).

8. A conveyor belt management method of managing a conveyor belt (30), based on the surface shape of the conveyor belt (30) computed by the surface shape measurement method according to any one of claims 5 to 7.

## Patentansprüche

1. Oberflächenformmessvorrichtung (10), die dazu ausgestaltet ist, eine Oberflächenform eines Förderbands (30) zu messen, das um eine Umlenkrolle (20) gewickelt ist, wobei die Oberflächenform eine Form der Oberfläche einschließlich ihrer Unebenheit ist, wobei die Oberflächenformmessvorrichtung (10) aufweist:
eine Umlenkrollenoberflächenmesseinheit (11), die dazu ausgestaltet ist, eine erste Messung durchzuführen, in der eine Oberflächenform der Umlenkrolle (20) gemessen wird;
eine Bandoberflächenmesseinheit (12), die dazu ausgestaltet ist, eine zweite Messung durchzuführen, in der die Oberflächenform des Förderbands (30) in einem Abschnitt gemessen wird, in dem das Förderband (30) die Umlenkrolle (20) berührt; und
eine Arithmetikeinheit (13), die dazu ausgestaltet ist, die Oberflächenform des Förderbands (30) unter Ausschluss eines Einflusses der Oberflächenform der Umlenkrolle (20) basierend auf in der ersten Messung erhaltener Information über die Oberflächenform und in der zweiten Messung erhaltener Information über die Oberflächenform zu berechnen,
**dadurch gekennzeichnet, dass** die Umlenkrollenoberflächenmesseinheit (11) aufweist:
ein Schienenelement (111), das sich in einer Breitenrichtung der Umlenkrolle (20) in einem Abschnitt erstreckt, in dem das Förderband (30) die Umlenkrolle (20) nicht berührt;
ein Befestigungselement (112), das dazu ausgestaltet ist, das Schienenelement (111) an der Umlenkrolle (20) zu befestigen; und
ein Messinstrument (113), das dazu ausgestaltet ist, die Oberflächenform der Umlenkrolle (20) zu messen, während es sich auf dem Schienenelement (111) bewegt.

2. Oberflächenformmessvorrichtung (10) nach Anspruch 1, wobei
die Umlenkrollenoberflächenmesseinheit (11) dazu ausgestaltet ist, die Oberflächenform der Umlenkrolle (20) in jeweiligen vorbestimmten Drehwinkeln zu messen, und
die Arithmetikeinheit (13) entsprechend eines Drehwinkels der Umlenkrolle (20) zugehörige Information über die Oberflächenform der Umlenkrolle (20) in dem Drehwinkel ausliest und die Oberflächenform des Förderbands (30) unter Ausschluss des Einflusses der Oberflächenform der Umlenkrolle (20) berechnet.

3. Oberflächenformmessvorrichtung (10) nach Anspruch 1 oder 2, wobei
die Umlenkrollenoberflächenmesseinheit (11) eine Kontaktmessvorrichtung ist, die dazu ausgestaltet ist, die Oberflächenform der Umlenkrolle (20) zu messen, während sie mit der Umlenkrolle (20) in Kontakt ist, und
die Bandoberflächenmesseinheit (12) eine kontaktlose Messvorrichtung ist, die dazu ausgestaltet ist, die Oberflächenform des Förderbands (30) zu messen, während sie nicht mit dem Förderband (30) in Kontakt ist.

4. Oberflächenformmessvorrichtung (10) nach einem der Ansprüche 1 bis 3, wobei
die Umlenkrolle (20) eine Mehrzahl von Umlenkrollen aufweist, um die das Förderband (30) gewickelt ist, und
die Umlenkrollenoberflächenmesseinheit (11) dazu ausgestaltet ist, eine Oberflächenform einer Umlenkrolle (20) der Mehrzahl von Umlenkrollen zu messen, die keinen Antriebsmechanismus aufweist.

5. Oberflächenformmessverfahren, das durch eine Oberflächenformmessvorrichtung (10) durchgeführt wird, die dazu ausgestaltet ist, eine Oberflächenform eines Förderbands (30) zu messen, das um eine Umlenkrolle (20) gewickelt ist, wobei die Oberflächenform eine Form der Oberfläche einschließlich ihrer Unebenheit ist, wobei das Oberflächenformmessverfahren umfasst:
einen Umlenkrollenoberflächenmessprozess des Durchführens einer ersten Messung, in der eine Oberflächenform der Umlenkrolle (20) gemessen wird;
einen Bandoberflächenmessprozess des Durchführens einer zweiten Messung, in der die Oberflächenform des Förderbands (30) in einem Abschnitt gemessen wird, in dem das Förderband (30) die Umlenkrolle (20) berührt; und
einen Rechenprozess des Berechnens der Oberflächenform des Förderbands (30) unter Ausschluss des Einflusses der Oberflächenform der Umlenkrolle (20) basierend auf in der ersten Messung erhaltener Information über die Oberflächenform und in der zweiten Messung erhaltener Information über die Oberflächenform, wobei der Umlenkrollenoberflächenmessprozess durch eine Umlenkrollenoberflächenmesseinheit (11) durchgeführt wird, die aufweist:
ein Schienenelement (111), das sich in einer Breitenrichtung der Umlenkrolle (20) in einem Abschnitt erstreckt, in dem das Förderband (30) die Umlenkrolle (20) nicht berührt;
ein Befestigungselement (112), das dazu ausgestaltet ist, das Schienenelement (111) an der Umlenkrolle (20) zu befestigen; und
ein Messinstrument (113), das dazu ausgestaltet ist, die Oberflächenform der Umlenkrolle (20) zu messen, während es sich auf dem Schienenelement (111) bewegt.

6. Oberflächenformmessverfahren nach Anspruch 5, wobei
der Umlenkrollenoberflächenmessprozess durchgeführt wird, wenn eine Drehung der Umlenkrolle (20) und des Förderbands (30) angehalten ist, und
der Bandoberflächenmessprozess durchgeführt wird, wenn sich die Umlenkrolle (20) und das Förderband (30) drehen.

7. Oberflächenformmessverfahren nach Anspruch 5 oder 6, wobei
der Umlenkrollenoberflächenmessprozess die Oberflächenform der Umlenkrolle (20) in jeweiligen vorbestimmten Drehwinkeln misst, und
der Rechenprozess entsprechend eines Drehwinkels der Umlenkrolle (20) zugehörige Information über die Oberflächenform der Umlenkrolle (20) in dem Drehwinkel ausliest und die Oberflächenform des Förderbands (30) unter Ausschluss des Einflusses der Oberflächenform der Umlenkrolle (20) berechnet.

8. Förderbandverwaltungsverfahren zum Verwalten eines Förderbands (30) basierend auf der durch das Oberflächenformmessverfahren nach einem der Ansprüche 5 bis 7 berechneten Oberflächenform des Förderbands (30).

## Revendications

1. Dispositif de mesure de forme de surface (10) configuré pour mesurer une forme de surface d'un convoyeur à courroie (30) enroulé autour d'une poulie (20), la forme de surface étant une forme de la surface incluant ses irrégularités, le dispositif de mesure de forme de surface (10) comprenant :
une unité de mesure de surface de poulie (11) configurée pour effectuer une première mesure au cours de laquelle une forme de surface de la poulie (20) est mesurée ;
une unité de mesure de surface de courroie (12) configurée pour effectuer une deuxième mesure au cours de laquelle la forme de surface du convoyeur à courroie (30) est mesurée dans une portion dans laquelle le convoyeur à courroie (30) entre en contact avec la poulie (20) ; et
une unité arithmétique (13) configurée pour calculer la forme de surface du convoyeur à courroie (30), en excluant une influence de la forme de surface de la poulie (20), sur la base d'informations concernant la forme de surface obtenues lors de la première mesure et d'informations concernant la forme de surface obtenues lors de la deuxième mesure,
**caractérisé en ce que** l'unité de mesure de surface de poulie (11) inclut :
un organe de rail (111) s'étendant dans une direction de largeur de la poulie (20) dans une portion dans laquelle le convoyeur à courroie (30) n'entre pas en contact avec la poulie (20) ;
un organe de fixation (112) configuré pour fixer l'organe de rail (111) à la poulie (20) ; et
un instrument (113) de mesure configuré pour mesurer la forme de surface de la poulie (20) tout en se déplaçant sur l'organe de rail (111).

2. Dispositif de mesure de forme de surface (10) selon la revendication 1, dans lequel
l'unité de mesure de surface de poulie (11) est configurée pour mesurer la forme de surface de la poulie (20) à des angles de rotation prédéterminés respectifs, et
en fonction d'un angle de rotation de la poulie (20), l'unité arithmétique (13) lit des informations correspondantes sur la forme de surface de la poulie (20) à l'angle de rotation et calcule la forme de surface du convoyeur à courroie (30), en excluant l'influence de la forme de surface de la poulie (20).

3. Dispositif de mesure de forme de surface (10) selon la revendication 1 ou la revendication 2, dans lequel
l'unité de mesure de surface de poulie (11) est un dispositif de mesure de contact configuré pour mesurer la forme de surface de la poulie (20) tout en étant en contact avec la poulie (20), et
l'unité de mesure de surface de courroie (12) est un dispositif de mesure sans contact configuré pour mesurer la forme de surface du convoyeur à courroie (30) tout en étant sans contact avec le convoyeur à courroie (30).

4. Dispositif de mesure de forme de surface (10) selon l'une quelconque des revendications 1 à 3, dans lequel
la poulie (20) comprend une pluralité de poulies autour desquelles est enroulé le convoyeur à courroie (30), et
l'unité de mesure de surface de poulie (11) est configurée pour mesurer une forme de surface d'une poulie (20) parmi la pluralité de poulies qui n'inclut pas de mécanisme d'entraînement.

5. Procédé de mesure de forme de surface effectué par un dispositif de mesure de forme de surface (10) configuré pour mesurer une forme de surface d'un convoyeur à courroie (30) enroulé autour d'une poulie (20), la forme de surface étant une forme de la surface incluant son irrégularité, le procédé de mesure de forme de surface comprenant :
un processus de mesure de surface de poulie destiné à effectuer une première mesure au cours de laquelle une forme de surface de la poulie (20) est mesurée ;
un processus de mesure de surface de courroie destiné à effectuer une deuxième mesure au cours de laquelle la forme de surface du convoyeur à courroie (30) est mesurée dans une portion dans laquelle le convoyeur à courroie (30) entre en contact avec la poulie (20) ; et
un processus de calcul destiné à calculer la forme de surface du convoyeur à courroie (30), en excluant une influence de la forme de surface de la poulie (20), sur la base d'informations sur la forme de surface obtenues lors de la première mesure et d'informations sur la forme de surface obtenues lors de la deuxième mesure, dans lequel le processus de mesure de surface de poulie est effectué par une unité de mesure de surface de poulie (11) qui inclut :
un organe de rail (111) s'étendant dans une direction de largeur de la poulie (20) dans une portion dans laquelle le convoyeur à courroie (30) n'entre pas en contact avec la poulie (20) ;
un organe de fixation (112) configuré pour fixer l'organe de rail (111) à la poulie (20) ; et
un instrument (113) de mesure configuré pour mesurer la forme de surface de la poulie (20) tout en se déplaçant sur l'organe de rail (111).

6. Procédé de mesure de forme de surface selon la revendication 5, dans lequel
le processus de mesure de surface de poulie est effectué lorsque la rotation de la poulie (20) et du convoyeur à courroie (30) est arrêtée, et
le processus de mesure de surface de courroie est effectué lorsque la poulie (20) et le convoyeur à courroie (30) sont en rotation.

7. Procédé de mesure de forme de surface selon la revendication 5 ou la revendication 6, dans lequel
le processus de mesure de surface de poulie mesure la forme de surface de la poulie (20) à des angles de rotation prédéterminés respectifs, et
en fonction d'un angle de rotation de la poulie (20), le processus de calcul lit des informations correspondantes sur la forme de surface de la poulie (20) à l'angle de rotation et calcule la forme de surface du convoyeur à courroie (30), en excluant l'influence de la forme de surface de la poulie (20).

8. Procédé de gestion de convoyeur à courroie destiné à gérer un convoyeur à courroie (30), basé sur la forme de surface du convoyeur à courroie (30) calculée par le procédé de mesure de forme de surface selon l'une quelconque des revendications 5 à 7.
